# EUROPÄISCHE PATENTANMELDUNG

(11) **EP 4 550 484 A2**
(43) Veröffentlichungstag der Anmeldung: **07.05.2025**
(21) Anmeldenummer: 24199895.4
(22) Anmeldetag: 12.09.2024
(51) Int. Cl.: H01M 8/04014, H01M 8/04029, H01M 8/04225, H01M 8/04223, H01M 8/04302, B64D 27/355, B64D 33/08, H01M 8/10

(54) **VERFAHREN ZUM STARTEN EINER BRENNSTOFFZELLE BEI NIEDRIGEN TEMPERATUREN**

(30) Priorität: 13.09.2023 DE 102023124662
(71) Anmelder: Aerostack GmbH, 72581 Dettingen an der Erms (DE)
(72) Erfinder: SCHUDY, Markus, 72581 Dettingen an der Erms (DE); BUNTZ, Marcus-Benedict, 72581 Dettingen an der Erms (DE); ZIEGLER, Christoph, 72581 Dettingen an der Erms (DE)
(74) Vertreter: LKGLOBAL Lorenz & Kopf Patentanwalt Attorney at Law PartG mbB

(57) **Zusammenfassung**

Es ist ein Verfahren (100) und ein System (10) zum Starten einer Brennstoffzelle bei Temperaturen unter 0° Celsius mit einem Zwei-Phasen-Kühlsystem angegeben, wobei das Zwei-Phasen-Kühlsystem eine Pumpe (20) zum Fördern eines im Zwei-Phasen-Kühlsystem vorliegenden Kühlmittels aufweist, wobei das Kühlmittel im Zwei-Phasen-Kühlsystem zumindest teilweise in einer Gasphase vorliegt, aufweisend die folgenden Schritte:
Starten (102) der Brennstoffzelle (12),
Aktivieren (104) der Pumpe (20) nach einem definierten Zeitraum, wobei während des definierten Zeitraums das Kühlmittel im Wesentlichen in der Gasphase innerhalb der Brennstoffzelle (12) vorliegt.

## Beschreibung

### Gebiet der Erfindung

Die vorliegende Beschreibung betrifft allgemein das technische Gebiet der Luftfahrt. Insbesondere betrifft die Beschreibung ein Verfahren zum Starten einer Brennstoffzelle bei niedrigen Temperaturen sowie ein zugehöriges System und ein Luftfahrzeug aufweisend ein solches System.

### Hintergrund der Erfindung

Brennstoffzellen stellen eine mögliche Lösung für den emissionsfreien Antrieb oder die emissionsfreie Bordstromversorgung (APU = Auxiliary Power Unit) von beispielweise Flugzeugen dar. Polymer-Elektrolyt-Brennstoffzellen (PEMFC) erzeugen Strom und Elektrizität durch die elektrochemische Reaktion von Wasserstoff und Sauerstoff zu Wasser. Bei dieser Reaktion entsteht Wärme, die abgeführt werden muss. In kommerziellen Brennstoffzellen-Stapeln erfolgt dies in der Regel durch eine Flüssigkeitskühlung. Eine mögliche Alternative, die ein erhebliches Gewichtseinsparungspotenzial auf der Antriebssystemebene oder Bordstromversorgungssystemebene bietet, besteht darin, die Flüssigkeitskühlung durch einen Zwei-Phasen-Kühlkreislauf zu ersetzen. Dabei wird die latente Verdampfungswärme genutzt, um große Wärmemengen von den Brennstoffzellen abzuführen. Zusätzlich verbessert der hohe Wärmeübertragungskoeffizient im Vergleich zur einphasigen Kühlung die Leistung des thermischen Managementsystems. Der Zwei-Phasen-Kühlkreislauf basiert auf den Phasenübergängen in den Brennstoffzellen (Verdampfer) sowie im Wärmetauscher zur Umgebung (Kondensator).

Bei typischen Brennstoffzellensystemen, insbesondere für mobile Anwendungen, ist es erforderlich, dass das System auch bei Temperaturen unter dem Gefrierpunkt gestartet werden kann. Während dieses Startszenarios trägt die Wärme, die von den Brennstoffzellen erzeugt wird, maßgeblich zur Erwärmung des Systems bei. Dies stellt eine Herausforderung dar, da die Eisbildung aufgrund des entstehenden Wassers mit der erzeugten Wärme in Einklang gebracht werden muss.

### Zusammenfassung der Erfindung

Es kann als Aufgabe der Erfindung betrachtet werden, den Startvorgang der Brennstoffzelle bei Temperaturen unterhalb des Gefrierpunkts zu beschleunigen.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem Aspekt ist ein Verfahren zum Starten einer Brennstoffzelle bei Temperaturen unter 0° Celsius mit einem Zwei-Phasen-Kühlsystem angegeben. Das Zwei-Phasen-Kühlsystem weist eine Pumpe zum Fördern einer im Zwei-Phasen-Kühlsystem vorliegenden Kühlmittel auf, wobei das Kühlmittel im Zwei-Phasen-Kühlsystem zumindest teilweise in einer Gasphase vorliegt.

Das Verfahren weist die folgenden Schritte auf:
Starten der Brennstoffzelle,
Aktivieren der Pumpe nach einem definierten Zeitraum, wobei während des definierten Zeitraums das Kühlmittel im Wesentlichen in der Gasphase innerhalb der Brennstoffzelle vorliegt.

Temperaturen unter dem Gefrierpunkt führen zu Eisbildung in den Gaskanälen. Aus diesem Grund wird die Zeit, um Temperaturen über 0 °C zu erreichen, als entscheidender Faktor angesehen, und eine Reduzierung der zu erwärmenden thermischen Masse als vorteilhaft betrachtet. Um diesen Prozess im Vergleich zur Flüssigkeitskühlung zu beschleunigen, wird die technische Lösung vorgeschlagen, den Zwei-Phasen-Zustand des Kühlmittels in der Brennstoffzelle zu nutzen und die Kühlmittelpumpe präzise zu steuern.

Das beschriebene Verfahren zum Starten einer Brennstoffzelle bei Temperaturen unter 0°C mit einem Zwei-Phasen-Kühlsystem bietet somit eine effektive Methode, um die Brennstoffzelle in kalten Umgebungen zu aktivieren und zu betreiben. Das Zwei-Phasen-Kühlsystem verwendet eine spezielle Pumpe, um das Kühlmittel zu fördern, wobei das Kühlmittel zumindest teilweise in einer Gasphase vorliegt.

Der Startvorgang beginnt mit dem Starten der Brennstoffzelle gemäß den üblichen Verfahren. Nach einem definierten Zeitraum, der für die notwendige Aktivierung der Brennstoffzelle erforderlich ist, wird die Pumpe aktiviert. Während dieses definierten Zeitraums liegt das Kühlmittel im Wesentlichen in der Gasphase innerhalb der Brennstoffzelle vor.

Durch diese Vorgehensweise werden mehrere Vorteile erzielt. Erstens ermöglicht die Verwendung eines Zwei-Phasen-Kühlsystems eine effiziente Wärmeabfuhr und gewährleistet eine optimale Kühlung der Brennstoffzelle, selbst bei niedrigen Temperaturen. Zweitens ermöglicht die Aktivierung der Pumpe nach einem definierten Zeitraum eine verkürzte Anlaufzeit für die Brennstoffzelle mit geringer thermischer Masse, bevor das Kühlmittel unterkühlt eintritt um die Startzeit bzw. Aufwärmzeit zu verkürzen. Liegt das Kühlmittel in der Gasphase vor, so weist das Kühlmittel eine gegenüber der Flüssigphase geringere Dichte auf. Diese geringere Dichte resultiert in einer geringeren thermische Masse, was zu einer schnelleren Aufheizung bei gleicher Wärmezufuhr führt.

Die Anwendung dieses Verfahrens bietet daher eine zuverlässige Möglichkeit, eine Brennstoffzelle bei kalten Temperaturen erfolgreich zu starten und anschließend zu betreiben. Es ermöglicht eine effiziente Kühlung und trägt zur langfristigen Stabilität und Leistungsfähigkeit der Brennstoffzelle bei niedrigen Temperaturen bei. Durch die Gewährleistung eines optimalen Betriebs der Brennstoffzelle in kalten Umgebungen wird die Einsatzfähigkeit und Zuverlässigkeit des Systems verbessert.

Gemäß einer Ausführungsform liegt bei dem Schritt des Startens in der Brennstoffzelle das Kühlmittel zu 100 % in der Gasphase vor.

Gemäß einer Ausführungsform beträgt der definierte Zeitraum 60 sec, vorzugsweise 30 sec, besonders bevorzugt 20 sec.

Gemäß einer Ausführungsform umfasst das Kühlmittel Methanol und/oder Ethanol. Diese Wahl des Kühlmittels bietet mehrere Vorteile für das System.

Methanol und Ethanol weisen eine hohe Wärmeleitfähigkeit auf, was bedeutet, dass sie Wärme effizient von den Brennstoffzellen abführen können. Dadurch wird eine effektive Kühlung der Komponenten ermöglicht und die Betriebstemperatur der Brennstoffzelle auf einem optimalen Niveau gehalten.

Ferner haben Methanol und Ethanol niedrige Siedepunkte. Dies ist vorteilhaft, da sie schnell verdampfen können, wenn sie durch die Kühlmittelkanäle fließen. Durch die Verdampfung wird Wärme von den Komponenten absorbiert, was zu einer effektiven Kühlung führt.

Ferner weisen Methanol und Ethanol eine hohe Verdampfungsenthalpie auf. Dadurch können sehr kleine Massenströme im System realisiert werden, wodurch Druckverlust reduziert wird. Dadurch können Leitungen und Pumpen kleiner dimensioniert werden als mit der Flüssigkeitskühlung, was zu einer Einsparung des Systemgewichts führt.

Gemäß einer Ausführungsform arbeitet die Kühlmittelpumpe intermittierend, um eine thermische Masse eines Massenstroms des Kühlmittels in der Brennstoffzelle gering zu halten.

Intermittierend steht dabei für ein Ein- und Ausschalten in bestimmten Zeitintervallen. Dieser Betriebsmodus dient dazu, die thermische Masse des Kühlmittels in der Brennstoffzelle gering zu halten.

Durch das intermittierende Betreiben der Kühlmittelpumpe wird der Massenstrom des Kühlmittels in der Brennstoffzelle reduziert. Dies bedeutet, dass nur eine begrenzte, insbesondere keine Menge Kühlmittel in der Zelle zirkuliert, was zu einer verringerten thermischen Masse führt.

Der Vorteil dieser Vorgehensweise liegt darin, dass eine geringere Masse an Kühlmittel in der Brennstoffzelle zu einer schnelleren Reaktionszeit und einer effizienteren Wärmeableitung führt. Zudem trägt die Reduzierung der thermischen Masse dazu bei, dass die Brennstoffzelle insgesamt effizienter und stabiler arbeitet.

Durch die intermittierende Arbeitsweise der Kühlmittelpumpe kann auch der Energieverbrauch des Systems optimiert werden. Die Pumpe muss nicht kontinuierlich arbeiten, sondern kann in Abhängigkeit von den thermischen Anforderungen der Brennstoffzelle gesteuert werden. Dies führt zu einer effizienteren Nutzung der verfügbaren Energie und kann die Gesamteffizienz des Systems verbessern.

Gemäß einem Aspekt ist ein System zum Starten einer Brennstoffzelle bei Temperaturen unter 0° Celsius mit einem Zwei-Phasen-Kühlsystem, eingerichtet ein Verfahren zum Starten einer Brennstoffzelle bei Temperaturen unter 0° Celsius auszuführen. Das System weist hierfür mindestens eine Brennstoffzelle, eine Pumpe, einen Wärmetauscher und einen Kühlmittelkreislauf auf. Der Kühlmittelkreislauf ist eingerichtet, die Brennstoffzelle durch Zwei-Phasen-Kühlung zu kühlen. Die Pumpe ist eingerichtet, nach einem definierten Zeitraum aktivierbar zu sein.

Gemäß einer Ausführungsform wird ein Kondensator-Bypass genutzt, um eine thermische Masse eines durch die Brennstoffzelle zirkulierenden Massenstroms gering zu halten.

In dieser Ausführungsform wird ein Kondensator-Bypass eingesetzt, um die thermische Masse eines zirkulierenden Massenstrom zum und/oder vom Kondensator gering zu halten. Ein Kondensator-Bypass ist eine Vorrichtung oder eine Anordnung, die es ermöglicht, einen Teil des Massenstroms oder des Kühlmittels um den Kondensator herumzuleiten, anstatt sie durch den Kondensator zu führen. Der Kondensator-Bypass leitet das Kühlmittel somit am Kondensator vorbei. Dadurch verringert sich die thermische Masse des zirkulierenden Kühlmittels im Kreislauf und es findet keine unnötige Wärmeabgabe an die Umgebung während des Startprozesses statt.

Der Zweck des Kondensator-Bypass besteht darin, die Menge an Kühlmittel, das im Kühlkreislauf zirkuliert, zu reduzieren. Durch die Umleitung eines Teils des Massenstroms um den Kondensator herum wird die thermische Masse des Kühlmittels, das in der Brennstoffzelle zirkuliert, verringert.

Der Vorteil dieser Anordnung liegt in der schnelleren Reaktionszeit und der effizienteren Wärmeableitung. Da weniger Kühlmittel in der Brennstoffzelle zirkuliert, kann die Betriebstemperatur schneller erreicht werden. Gleichzeitig wird eine gleichmäßigere Temperaturverteilung in der Brennstoffzelle erreicht, was zu einer verbesserten Leistung und Stabilität des Systems führt.

Darüber hinaus trägt die Reduzierung der thermischen Masse durch den Kondensator-Bypass dazu bei, dass die Brennstoffzelle insgesamt effizienter arbeitet. Weniger Kühlmittel bedeutet weniger Energieaufwand für den Betrieb der Kühlmittelpumpe, was zu einer optimierten Energienutzung führt.

Der Kondensator-Bypass kann auch zur Kontrolle der Kühlmitteltemperatur eingesetzt werden. Durch die Umleitung eines Teils des Massenstroms um den Kondensator herum kann die Temperatur des Kühlmittels effektiv reguliert werden, um eine optimale Betriebstemperatur der Brennstoffzelle aufrechtzuerhalten.

Gemäß einem Aspekt umfasst ein Luftfahrzeug ein derartiges System. Das System kann dabei ausdrücklich auch in anderen Systemen Anwendung finden, wie Kraftfahrzeuge, Wasserfahrzeuge, Raumfahrt, oder sonstige mit einer Brennstoffzelle angetriebenen Einheiten.

Das bestehende Systemdesign sieht zusammenfassend vor, dass die Brennstoffzellen geodätisch in einer höheren Position als der Rest des Kühlmittelsystems angeordnet sind. Das Kühlmittel sammelt sich in der unteren Hälfte des Kreislaufs, während in den anderen Teilen des Kühlmittelsystems (z. B. den Brennstoffzellen) die Dampfphase vorherrscht. Anstatt die Pumpe einzuschalten und die Flüssigkeit in den Brennstoffzellen-Stack zu drücken, wird die Pumpe später aktiviert. Zusätzlich können Isolationsventile verwendet werden, um den Brennstoffzellen-Stack vom Kühlmittelkreislauf zu isolieren. Aufgrund der geringeren Wärmekapazität des dampfförmigen Kühlmittels im Kühlmittelkanal kann der Startvorgang des Brennstoffzellenstapels beschleunigt werden (geringere thermische Masse im Vergleich zur herkömmlichen Flüssigkeitskühlung aufgrund geringerer Wärmekapazität des Gases). Die Temperatur des Brennstoffzellen-Stacks wird schnell ansteigen, und sobald eine ausreichende Betriebstemperatur erreicht ist, öffnen sich die Isolationsventile zum Brennstoffzellen-Stack und spülen ihn mit kaltem Kühlmittel. Dadurch kommt es zu einem plötzlichen Temperaturabfall. Um den Temperaturabfall zu begrenzen, kann die Pumpenflussrate für einen sanften Startvorgang kontrolliert werden (Rampenmodus, periodisches Ein-/Ausschalten, zyklischer Modus). Der Brennstoffzellen-Stack kann weiterhin durch ausschließliche Flüssigkeitskühlung aufgeheizt werden, da diese einen geringeren Wärmeübertragungskoeffizienten als die Zwei-Phasen-Kühlung aufweist. Sobald die Betriebstemperatur erreicht ist, kann die Sättigungstemperatur für die Zwei-Phasen-Kühlung festgelegt werden.

Wenn die Kühlmittelzirkulation insgesamt auf die Brennstoffzelle und den Bypass beschränkt ist und der Kondensator für den Start nicht in Betrieb genommen wird, ist die thermische Masse in der Brennstoffzelle noch die selbe, aber die thermische Masse des zu erwärmenden Kühlmittels außerhalb der Brennstoffzelle ist begrenzt/geringer.

Gemäß einer Ausführungsform kann das Verfahren ferner um folgende Verfahrensschritte zur Reduktion von Temperaturspitzen während des Startens ergänzt werden, was insbesondere bei kaltem Material vorteilhaft ist:
Einstellen eines Sättigungsdrucks eines Kühlmittels, über ein Druckregelungsmodul, auf einen ersten Sättigungsdruck, derart, dass eine durch Siedeverzug induzierte Höchsttemperatur eines Kühlmittels unterhalb einer maximalen Betriebstemperatur der Brennstoffzelle liegt;
Starten der Brennstoffzelle;
in Reaktion darauf, dass die durch Siedeverzug induzierte Höchsttemperatur des Kühlmittels überschritten ist, Einstellen des Sättigungsdrucks des Kühlmittels, über das Druckregelungsmodul, auf einen zweiten Sättigungsdruck, wobei der zweite Sättigungsdruck höher als der erste Sättigungsdruck ist.

Bei Zwei-Phasen-Strömungen ist die Sättigungstemperatur abhängig vom Druck. Die vorgeschlagene Betriebsstrategie der weiteren Verfahrensschritte besteht somit darin, die Höchsttemperatur des Siedeverzugs während der Startphase unterhalb einer Temperaturgrenze der Zellkomponenten festzulegen, indem der Sättigungsdruck im Kühlsystem gesenkt wird. Sobald der Spitzenwert überschritten ist und der Siedeprozess eingeleitet wird, kann der Sollwert des Druckreglers auf den nominellen Betriebsdruck/-temperatur erhöht werden.

Ein Vorteil dieser beschriebenen zusätzliche Verfahrensschritte zur Reduzierung von Temperaturspitzen während des Startens einer Brennstoffzelle mit einem Zwei-Phasen-Kühlsystem liegt darin, dass es eine effektive Kontrolle und Regulierung des Sättigungsdrucks des Kühlmittels ermöglicht.

Durch das Einstellen des Sättigungsdrucks des Kühlmittels auf einen ersten Sättigungsdruck, der unterhalb der maximalen Betriebstemperatur der Brennstoffzelle liegt, wird sichergestellt, den Effekt des Siedeverzugs und damit eine Überhitzung über die eingestellte Siedetemperatur zu vermeiden. Dies reduziert das Risiko von Temperaturspitzen, die während des Startvorgangs auftreten können.

Nach dem Start der Brennstoffzelle überwacht das Verfahren kontinuierlich die Temperatur des Kühlmittels. Wenn die durch Siedeverzug induzierte Höchsttemperatur überschritten wird, wird der Sättigungsdruck des Kühlmittels angepasst, indem das Druckregelungsmodul verwendet wird. Der Sättigungsdruck wird auf einen zweiten, höheren Sättigungsdruck eingestellt. Dadurch wird eine erhöhte Wärmeabfuhr durch das Kühlmittel ermöglicht, was zu einer verbesserten Kühlleistung führt und die Temperatur der Brennstoffzelle effektiv kontrolliert.

Der Vorteil dieses Ansatzes liegt in der Fähigkeit, Temperaturspitzen während des Startvorgangs insbesondere bei Kalten Temperaturen zu verhindern oder zu reduzieren. Durch die rechtzeitige Anpassung des Sättigungsdrucks kann eine optimale Kühlleistung sichergestellt werden, ohne dass es zu einer Überhitzung durch Siedeverzug über die anvisierte Betriebstemperatur kommt. Dies trägt zur Stabilität und Langlebigkeit der Brennstoffzelle bei und ermöglicht einen reibungslosen Betrieb des Systems.

Zusammenfassend ermöglicht das beschriebene Verfahren die präzise Steuerung des Sättigungsdrucks des Kühlmittels, um Temperaturspitzen während des Startvorgangs einer Brennstoffzelle zu minimieren. Dies führt zu einer verbesserten Zuverlässigkeit, Leistung und Lebensdauer der Brennstoffzelle sowie zu einer insgesamt optimierten Betriebseffizienz des Brennstoffzellensystems.

Ein derartiges Verfahren zum Starten einer Brennstoffzelle bei Temperaturen unter 0°C und zusätzlich zur Reduktion von Temperaturspitzen während des Startens ist insbesondere mit einem beschriebenen System zum Betreiben einer Brennstoffzelle mit einem Zwei-Phasen-Kühlsystem ausführbar.

### Kurze Beschreibung der Figuren

Nachfolgend wird anhand der beigefügten Zeichnungen näher auf Ausführungsbeispiele der Erfindung eingegangen. Die Darstellungen sind schematisch und nicht maßstabsgetreu. Gleiche Bezugszeichen beziehen sich auf gleiche oder ähnliche Elemente. Es zeigen:
- **Fig. 1**: ein Flussdiagramm eines Verfahrens zum Starten einer Brennstoffzelle bei Temperaturen unter 0°C;
- **Fig. 2A**: ein System zum Betreiben einer Brennstoffzelle mit einem Zwei-Phasen-Kühlsystem nach einer ersten Ausführungsform;
- **Fig. 2B**: ein System zum Betreiben einer Brennstoffzelle mit einem Zwei-Phasen-Kühlsystem nach einer zweiten Ausführungsform;
- **Fig. 3**: ein Luftfahrzeug mit einem System zum Starten einer Brennstoffzelle bei Temperaturen unter 0°C;
- **Fig. 4**: eine graphische Darstellungen eines Temperaturverlaufs über die Zeit.

### Detaillierte Beschreibung von Ausführungsbeispielen

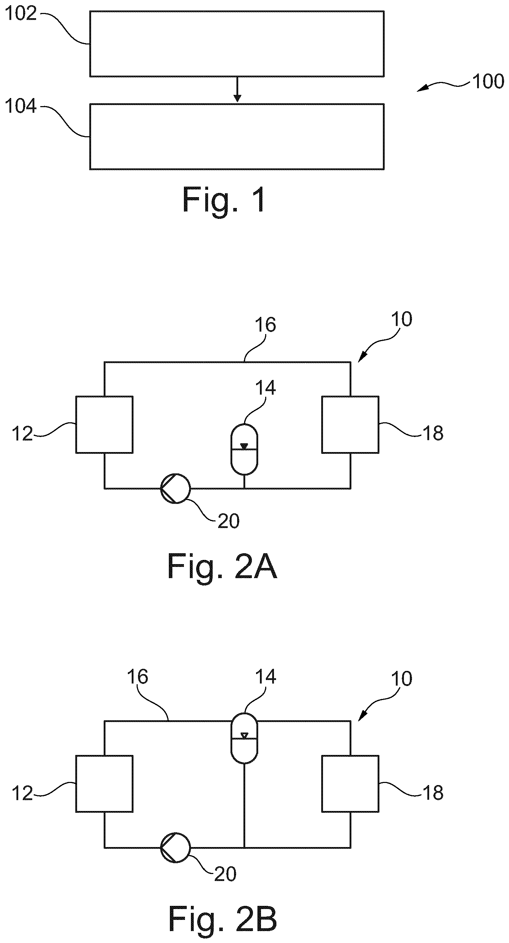

Figur 1 zeigt ein Verfahren 100 zum Starten einer Brennstoffzelle bei Temperaturen unter 0°C mit einem Zwei-Phasen-Kühlsystem beinhaltet verschiedene Schritte, um einen reibungslosen Startvorgang zu gewährleisten. Bei diesem Verfahren wird ein Zwei-Phasen-Kühlsystem verwendet, das eine Pumpe 20 enthält, um das Kühlmittel im System 10 zu fördern. Dabei befindet sich das Kühlmittel zumindest teilweise in einer Gasphase innerhalb des Zwei-Phasen-Kühlsystems.

Der erste Schritt des Verfahrens ist das Starten 102 der Brennstoffzelle 12. Bei Temperaturen unter dem Gefrierpunkt ist es besonders wichtig, dass der Startvorgang ordnungsgemäß durchgeführt wird. Nachdem die Brennstoffzelle gestartet wurde, geht es zum nächsten Schritt über.

Im nächsten Schritt erfolgt das Aktivieren 104 der Pumpe 20, und zwar nach einem definierten Zeitraum. Während dieses Zeitraums befindet sich das Kühlmittel im Wesentlichen in der Gasphase innerhalb der Brennstoffzelle 12. Dies ist ein entscheidender Schritt, um die Kühlung effektiv zu gewährleisten. Durch die Aktivierung der Pumpe wird das Kühlmittel durch das Zwei-Phasen-Kühlsystem bewegt, wodurch die Wärme abgeführt und die Temperatur der Brennstoffzelle stabilisiert wird.

Das Verfahren ermöglicht es, die Brennstoffzelle auch bei extrem niedrigen Temperaturen erfolgreich zu starten. Durch das Zwei-Phasen-Kühlsystem und die gezielte Aktivierung der Pumpe wird die Kühlung optimiert. Dies trägt zur Verlängerung der Lebensdauer der Brennstoffzelle bei und erhöht ihre Betriebssicherheit.

Figur 2A und 2B zeigen jeweils ein System 10 zum Starten einer Brennstoffzelle bei Temperaturen unter 0°C mit einem Zwei-Phasen-Kühlsystem, das dafür eingerichtet ist, dass das beschriebene Verfahren 100 auszuführen. Das System 10 besteht aus mehreren Komponenten, die zusammenarbeiten, um einen erfolgreichen Startvorgang zu ermöglichen.

Die zentrale Komponente des Systems ist die Brennstoffzelle 12, die chemische Energie in elektrische Energie umwandelt. Um eine effektive Kühlung der Brennstoffzelle zu gewährleisten, wird ein Zwei-Phasen-Kühlsystem verwendet.

Dieses System nutzt eine Kombination aus Flüssig- und Gasphase des Kühlmittels, um die Wärme abzuführen und die Temperatur der Brennstoffzelle zu regulieren.

Um das Kühlmittel im Kühlsystem zu bewegen, ist eine Pumpe 20 vorhanden. Diese Pumpe ist so konzipiert, dass sie nach einem definierten Zeitraum aktiviert werden kann. Dieser Zeitraum ist entscheidend, um sicherzustellen, dass das Kühlmittel im richtigen Zustand ist, um die optimale Kühlung der Brennstoffzelle zu gewährleisten.

Zusätzlich zum Zwei-Phasen-Kühlsystem und der Pumpe 20 ist ein Kühlmittelkreislauf 16 und ein Wärmetauscher 18 im System 10 integriert. Dieser Kreislauf ermöglicht den kontinuierlichen Fluss des Kühlmittels durch die Brennstoffzelle und das Kühlsystem. Durch den Kühlmittelkreislauf wird sichergestellt, dass das Kühlmittel effizient zirkuliert und die Wärmeabfuhr optimiert wird.

Der wesentliche Unterschied der Ausführungsformen von Figur 2A zu 2B kann darin gesehen werden, dass der Akkumulator/Sammler 14 in Verbindung mit der Rückführungslinie ist und sich dadurch die Gasphase mit der Flüssigphase vermischen können. In dieser Ausführungsform wird ein Kondensator-Bypass eingesetzt, um die thermische Masse eines durch die Brennstoffzelle zirkulierenden Massestrom gering zu halten. Ein Kondensator-Bypass ist eine Vorrichtung oder eine Anordnung, die es ermöglicht, einen Teil des Massenstroms oder des Kühlmittels um den Kondensator herumzuleiten, anstatt sie durch den Kondensator zu führen. Der Kondensator-Bypass leitet das Kühlmittel somit am Kondensator vorbei. Dadurch verringert sich die thermische Masse des zirkulierenden Kühlmittels im Kreislauf und es findet keine unnötige Wärmeabgabe an die Umgebung während des Startprozesses statt.

Das System 10 zum Betreiben einer Brennstoffzelle mit einem Zwei-Phasen-Kühlsystem bietet eine effiziente Kühlung, verbesserte Leistung und eine längere Lebensdauer der Brennstoffzelle 12. Es ermöglicht einen zuverlässigen Betrieb auch bei extremen Temperaturen und sorgt für eine stabile und effektive Energieerzeugung.

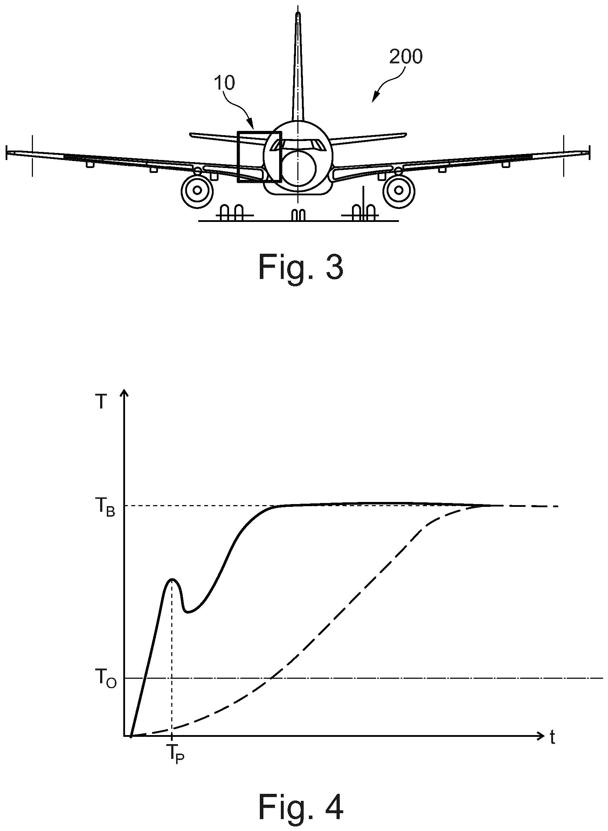

Figur 3 zeigt ein Luftfahrzeug 200 welches mit einem System 10 ausgestattet ist, das für den Betrieb einer Brennstoffzelle entwickelt wurde. Das System 10 arbeitet in Verbindung mit einer Brennstoffzelle, um eine effiziente Energieerzeugung zu ermöglichen.

Zusätzlich zum Kühlsystem 10 und der Pumpe 20 enthält das System 10 auch einen Kühlmittelkreislauf 16. Dieser Kühlmittelkreislauf 16 ermöglicht den kontinuierlichen Fluss des Kühlmittels durch das System, um eine konstante Kühlung der Brennstoffzelle zu gewährleisten. Der Kühlmittelkreislauf spielt eine entscheidende Rolle bei der Aufrechterhaltung der optimalen Betriebstemperatur der Brennstoffzelle, und kann mit dem beschriebenen Verfahren auch bei Temperaturen unter 0 °Celsius gestartet werden.

Figur 4 zeigt jeweils eine graphische Darstellungen zweier Temperaturverläufe über die Zeit. Beide Graphen beginnen unterhalb von 0° Celsius, T₀, und nähern sich der Betriebstemperatur T_{B} an. Es ist deutlich zu erkennen, dass der linke Graph (durchgezogene Linie) schneller die Betriebstemperatur T_{B} erreicht als der rechte Graph (strichlierte Linie). Dies liegt darin begründet, dass die Pumpe erst nach einem definierten Zeitraum t_{P} aktiviert wird und die beschriebenen Effekte eintreten. Demgegenüber verläuft der rechte Graph, welcher einen Verlauf darstellt, bei dem die Pumpe gleich zu Beginn aktiviert wird, deutlich flacher zu Beginn und die Betriebstemperatur T_{B} wird relativ hierzu später erreicht. Das beschriebene Verfahren ermöglicht somit den Startvorgang der Brennstoffzelle bei Temperaturen unterhalb des Gefrierpunkts zu beschleunigen

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: System
- 12: Brennstoffzelle
- 14: Akkumulator
- 16: Kühlmittelkreislauf
- 18: Wärmetauscher
- 20: Pumpe
- 100: Verfahren zum Starten einer Brennstoffzelle bei Temperaturen unter 0°
- 102: Starten der Brennstoffzelle
- 104: Aktivieren der Pumpe nach einem definierten Zeitraum
- 200: Luftfahrzeug
- T₀: Gefrierpunkt von Wasser
- T_{B}: Betriebstemperatur
- t_{P}: definierter Zeitraum

## Patentansprüche

1. Verfahren (100) zum Starten einer Brennstoffzelle (12) bei Temperaturen unter 0° Celsius mit einem Zwei-Phasen-Kühlsystem, wobei das Zwei-Phasen-Kühlsystem eine Pumpe (20) zum Fördern eines im Zwei-Phasen-Kühlsystem vorliegenden Kühlmittel aufweist, wobei das Kühlmittel im Zwei-Phasen-Kühlsystem zumindest teilweise in einer Gasphase vorliegt,
aufweisend die folgenden Schritte:
Starten (102) der Brennstoffzelle (12),
Aktivieren (104) der Pumpe (20) nach einem definierten Zeitraum, wobei während des definierten Zeitraums das Kühlmittel im Wesentlichen in der Gasphase innerhalb der Brennstoffzelle (12) vorliegt.

2. Verfahren (100) gemäß Anspruch 1, wobei bei dem Schritt des Startens in der Brennstoffzelle (12) das Kühlmittel zu 100 % in der Gasphase vorliegt.

3. Verfahren (100) gemäß Anspruch 1, wobei der definierte Zeitraum mindestens 60 sec, vorzugsweise mindestens 30 sec, besonders bevorzugt mindestens 20 sec beträgt.

4. Verfahren (100) gemäß einem der vorhergehenden Ansprüche, wobei das Kühlmittel Methanol und/oder Ethanol umfasst.

5. Verfahren (100) gemäß Anspruch 1, wobei die Pumpe (20) intermittierend arbeitet um eine thermische Masse eines Massenstroms des Kühlmittels in der Brennstoffzelle (12) gering zu halten.

6. System (10) zum Starten einer Brennstoffzelle bei Temperaturen unter 0° Celsius mit einem Zwei-Phasen-Kühlsystem, wobei das System (10) eingerichtet ist ein Verfahren gemäß einem der Ansprüche 1 bis 4 auszuführen, aufweisend mindestens eine Brennstoffzelle (12),
eine Pumpe (20),
einen Kühlmittelkreislauf (16),
wobei der Kühlmittelkreislauf (16) eingerichtet ist die Brennstoffzelle (12) durch Zwei-Phasen-Kühlung zu kühlen,
wobei die Pumpe (20) eingerichtet ist, nach einem definierten Zeitraum aktivierbar zu sein.

7. System (10) gemäß Anspruch 5, wobei ein Kondensator-Bypass genutzt wird, um eine thermische Masse eines Massenstroms zum und/oder vom Kondensator gering zu halten.

8. Luftfahrzeug (200) mit einem System (10) gemäß einem der Ansprüche 5 oder 6.
